# EUROPEAN PATENT SPECIFICATION

(11) **EP 1 151 423 B1**
(45) Date of publication and mention of the grant of the patent: **23.10.2002**
(21) Application number: 00915680.3
(22) Date of filing: 14.01.2000
(51) Int. Cl.: G08B 13/16, G01P 15/00

(54) **COMBINED MOTION DETECTION AND SHOCK SENSING APPARATUS**
KOMBINIERTE VORRICHTUNG MIT BEWEGUNGSDETEKTOR UND SCHOCKSENSOR
APPAREIL DETECTEUR DE MOUVEMENT ET CAPTEUR DE CHOC COMBINE

(30) Priority: 10.02.1999 SG 9900053
(43) Date of publication of application: 07.11.2001
(73) Proprietor: Agilis Communication Tech. Pty. Ltd., Singapore 609602 (SG)
(72) Inventor: FOONG, Chee, Meng, Singapore 190462 (SG)
(74) Representative: Sanderson, Nigel Paul
(86) International application number: SG0000005
(87) International publication number: WO00048156

(56) References cited:
- EP-A1- 0 664 531
- US-A- 4 797 661
- US-A- 4 901 569
- US-A- 5 510 765

## Description

### FIELD OF THE INVENTION

The present invention relates generally to the field of motion detection and shock sensing devices, and in particular, to a motion detector which can also detect shock or vibration.

### BACKGROUND OF THE INVENTION

Motion detectors and shock sensors are generally well known to those skilled in the art. A number of approaches are currently being used to facilitate the motion detection and shock sensing function in various devices, and these devices are employed in multitude of applications. Some of the approaches and the applications can be found in, among others, U.S. Patent No. 5,585,566, U.S. Patent No. 5,571,969, U.S. Patent No. 5,510,666, U.S. Patent No. 5,483,225, U.S. Patent No. 5,445,007, U.S. Patent No. 5,424,749, U.S. Patent No. 5,749,366, U.S. Patent No. 5,623,259, U.S. Patent No. 5,406,083, U.S. Patent No. 5,391,859, U.S. Patent No. 5,383,014, U.S. Patent No. 5,381,011, etc.

One common application for a motion detector and/or shock sensor is in the field of security. For instance, a motion detector may be placed in a home or an office during the non-working hours to detect an intruder. A shock sensor may be placed inside an automobile to detect a theft of the car, or disturbances causes by vandals. In these applications, the motion detector and the shock sensor would typically be coupled to an alarm or some other type of security system to alert the proper authority.

For some of these applications, it would be useful, and hence desirable, to be able to detect both motion and shock. For instance, in the case of a security system for an automobile, many different types of intrusions can occur, many of which can only be detected by either the motion detector or the shock sensor, but not both. For example, an intrusion such as force opening of the hood or the trunk of the automobile, or a breaking of the automobile's windshield, cannot be easily detected by the motion detector which usually only detects movement inside the car. On the other hand, a thief who carefully enters the inside of the automobile or simply reaches in to steal an object, is better detected by the motion detector.

Although it is possible to install both the motion detector and the shock sensor separately, it can be easily appreciated that it would be ideal to have a single device which can detect both motion and shock. For one, it is more convenient to install one device rather than two. Moreover, it is cheaper to produce a single integrated device performing two functions where some of the components can be shared, rather than producing two separate devices performing the functions in isolation. An ideal combined motion detector and shock sensor would share many of the same components such that a motion detector can easily be modified to also detect shock. Although a combined motion detector and shock sensor is disclosed in at least one known source, U.S. Patent No. 4,358,750, the device disclosed in this patent utilizes a complex circuitry and does not disclose any circuitry or method for easily modifying existing motion detectors to also detect shock. Hence, there is a desirability to have a single device which can detect both motion and shock, and which can be implemented easily and cheaply using existing motion detectors.

### OBJECT OF THE INVENTION

Therefore, it is the object of the present invention to provide a single device which can detect both motion and shock.

It is another object of the invention to provide a device by modifying existing motion detectors to also detect shock or vibration in a manner which is uncomplicated and cost effective to implement.

### SUMMARY OF THE INVENTION

The present invention is a combined motion detection and shock sensing apparatus which can be quickly implemented using currently-available motion detectors. The apparatus of the present invention comprises a housing which houses a motion detector having the necessary motion detecting circuitry. A spring tension coil is attached to the housing and placed such that at least a portion of it is within the field of coverage of the motion detector.

The motion detector operates in a manner consistent with many motion detectors currently available. When a shock or vibration is felt by the housing, the shock or vibration causes the spring tension coil to vibrate within the motion detector's field of coverage. The vibration motion of the spring tension coil, while very small, is detected by the motion detector so long as the coil is placed relatively near the motion detector.

The motion detector can be virtually any standard motion detectors currently available using microwave as the sensing element, though other types of motion detectors may be employed as well. The housing need not be of any particular dimension but sufficient room should be available to house the spring coil. The spring coil also need not be of any particular shape or dimension. However, as stated above, at least a portion of the spring coil should be within the field of coverage of the motion detector. In addition, the spring coil should be of a type such that a shock or vibration would cause the portion which is within the field of coverage to vibrate enough to cause the motion detector to detect the motion. This can be controlled by controlling the length, the weight, the shape, the material and/or the thickness of the spring coil. The choice, of course, depends on how sensitive one wishes the apparatus to be, which in turn, will depend on the particular application of the apparatus.

In an alternative embodiment of the present invention, the spring coil is replaced with a non-metallic container containing a liquid or other materials of similar characteristics such as powder having sufficient microwave reflectivity. The container is attached to the housing and placed within the field of the coverage of the motion detector. When a shock or vibration is felt by the housing, the shock or vibration causes perturbation in the liquid which is detected by the motion detector.

### BRIEF DESCRIPTION OF THE DRAWINGS

FIG. 1 is a schematic diagram illustrating the preferred embodiment of the present invention where a spring coil is used to detect shock or vibration.
FIG. 2 is a schematic diagram illustrating an alternative embodiment of the present invention where a container containing a liquid is used to detect shock or vibration.

### DETAILED DESCRIPTION OF THE INVENTION

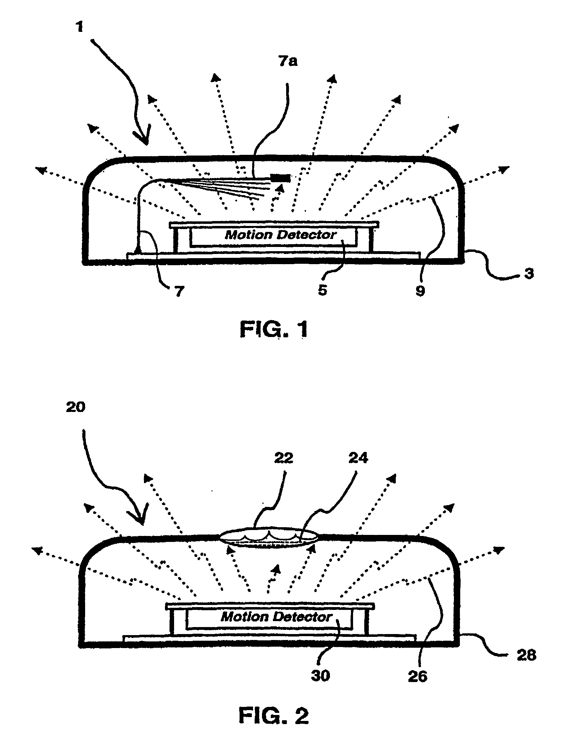

FIG. 1 illustrates a schematic diagram of the preferred embodiment of the combined motion detection and shock sensing apparatus 1. The apparatus 1 comprises a housing 3 which houses a motion detector 5 having the necessary motion detecting circuitry (not shown). A spring tension coil 7 is attached to the housing 3 and placed such that at least a portion, here 7a, of the tension coil 7 is within the field of coverage (as illustrated as the lines 9 protruding out of the motion detector 5) of the motion detector 5.

Currently, there are many different types of motion detectors. The motion detectors can be broad categorised by the types of sensing element used to detect motion. The types of motion detecting elements are microwave, passive infra-red (PIR), ultrasonic, and active infra-red (AIR). Although generally it may be possible to use all but the PIR type of motion detectors, the following description will focus mainly on the microwave type motion detectors. However, it should be understood that this is illustrative only and should not be construed as a limitation on the current invention.

The motion detector 5 operates in a manner consistent with virtually any microwave-type motion detector currently available, i.e., any sufficient movement within its field of coverage is detected. However, it should be noted that wavelength of the microwave needs to be shorter than the magnitude of the spring vibration. When a shock or vibration is felt by the housing 3, the shock or vibration causes the spring tension coil 7, and particularly the portion 7a, to vibrate within the motion detector's field of coverage 9. The vibration motion of the spring tension coil 7, while very small, is detected by the motion detector 5. This holds true so long as the portion 7a of the spring tension coil 7 is located sufficiently close to the motion detector 5 where the free space path loss is relatively low. Where this condition is generally met, the signal received by the motion detector should be sufficiently strong to detect the small movement of the coil 7.

The motion detector 5 can be virtually any microwave motion detectors currently available. The housing 5 need not be of any particular dimension but sufficient room should be available to house the spring coil 7 and the material must not block the sensing element, in this case, the microwave. It is commonly known that material such as metal can block microwaves. The spring coil 7 also need not be of any particular shape or dimension. However, as stated above, at least a portion of the spring coil 7 should be within the field of coverage of the motion detector, and it should not unduly affect the normal functions of the motion detector. In addition, the spring coil should be of a type such that a shock or vibration would cause the portion which is within the field of coverage to vibrate enough to cause the motion detector to detect the motion. This can be controlled by controlling the length, the shape, the material and/or the thickness of the spring coil. The choice, of course, depends on how sensitive one wishes the apparatus to be, which in turn, will depend on the particular application of the apparatus 1.

Although in illustrating the preferred embodiment of the present invention, a spring coil was shown as a preferred way of detecting shock or vibration, it is contemplated and other objects other than a spring coil may be employed which are still within the scope of the present invention. It will be appreciated by those in the skilled in the art that there are other objects which can be placed within the field of coverage of the motion sensor, which, when the housing experiences shock or vibration, will cause a vibration or other small motion by the object which would be detected by the motion detector.

For instance, FIG. 2 illustrates an alternative embodiment of the present invention. In this embodiment of the combined motion detection and shock sensing apparatus 20, the spring coil 7 in FIG. 1, is essentially replaced with a container 22 which is partially filled with a liquid 24 having sufficient microwave reflectivity, e.g., water. The container 22 needs to be of a material which is transparent to microwave such as plastic. Alternative to the liquid, the liquid may be replaced with powder having sufficient microwave reflectivity, or other material having similar characteristics as liquid. The container 22 containing the liquid (or other material) should not unduly affect the normal function of the motion detector.

Similar to the embodiment shown in FIG. 1, the liquid container 22 is attached to the housing 28 and placed within the field of coverage 26 of the motion detector 30. When a shock or vibration is experienced by the apparatus 20, the shock or vibration causes perturbation in the liquid which is detected by the motion detector 30. Again, although the movement of the liquid may be small, the motion may be detected so long as the liquid container 22 is placed relatively near the motion detector 30. How near the container has to be to the source of the microwave is somewhat depended on the wavelength of the microwave. Generally speaking, the distance should be at least 1/4 the wavelength of the microwave being transmitted.

The sensitivity of the apparatus 20 in detecting shock or vibration can be controlled by the choice of liquid inside the container 22. Generally, the higher the viscosity, less sensitive the apparatus 20 will be in sensing shock or vibration. For applications where the apparatus 20 will be exposed to extreme cold, the liquid 24 should be of the type which has correspondingly low freezing point. Also, where environmental factors are at issue, the liquid 24 should be of the type which is environmentally safe.

## Claims

1. A combined motion detecting and shock sensing apparatus comprising:
a motion detector;
a housing which houses said motion detector; and
an object attached to said housing where at least a portion of said object is within a field of coverage of said motion detector,
whereby shock or vibration experienced by said housing causes a movement in said object which is detected by said motion detector.

2. The combined motion detecting and shock sensing apparatus as recited in Claim 1 wherein said object is a spring coil.

3. The combined motion detecting and shock sensing apparatus as recited in Claim 1 wherein said object is a container containing a liquid.

4. The combined motion detecting and shock sensing apparatus as recited in Claim 1 wherein said motion detector is a microwave type motion detector.

5. A combined motion detecting and shock sensing apparatus comprising:
a motion detector;
a housing which houses said motion detector; and
a spring coil attached to said housing where at least a portion of said coil is within a field of coverage of said motion detector,
whereby shock or vibration experienced by said housing causes a movement of said coil which is detected by said motion detector.

6. The combined motion detecting and shock sensing apparatus as recited in Claim 5 wherein said spring coil has a general shape of an inverted "L".

7. The combined motion detecting and shock sensing apparatus as recited in Claim 5 wherein said motion detector is a microwave type motion detector.

8. A combined motion detecting and shock sensing apparatus comprising:
a motion detector;
a housing which houses said motion detector;
a container attached to said housing where at least a portion of said container is within a field of coverage of said motion detector; and
a material disposed within said container,
whereby shock or vibration experienced by said housing causes a movement in said material which is detected by said motion detector.

9. The combined motion detecting and shock sensing apparatus as recited in Claim 8 wherein said material is liquid.

10. The combined motion detecting and shock sensing apparatus as recited in Claim 8 wherein said material is environmentally safe.

11. The combined motion detecting and shock sensing apparatus as recited in Claim 9 wherein said liquid has relatively low freezing point.

12. The combined motion detecting and shock sensing apparatus as recited in Claim 8 wherein said material is powder.

13. The combined motion detecting and shock sensing apparatus as recited in Claim 8 wherein said motion detector is a microwave type motion detector.

## Patentansprüche

1. Eine kombinierte Vorrichtung mit Bewegungsdetektor und Stoßsensor umfassend:
einen Bewegungsdetektor;
ein Gehäuse, in dem der Bewegungsdetektor untergebracht ist; und
einen Gegenstand, der an dem Gehäuse angebracht ist, wo zumindest ein Teil des Gegenstandes innerhalb eines Feldes eines Erfassungsgebietes des Bewegungsdetektors liegt,
wobei ein Stoß oder eine Erschütterung, die durch das Gehäuse erfahren wird, eine Bewegung in diesem Gegenstand verursacht, die durch den Bewegungsdetektor delektiert wird.

2. Die kombinierte Vorrichtung mit Bewegungsdetektor und Stoßsensor nach Anspruch 1, wobei der Gegenstand eine Feder ist.

3. Die kombinierte Vorrichtung mit Bewegungsdetektor und Stoßsensor nach Anspruch 1, wobei der Gegenstand ein Behälter ist, der eine Flüssigkeit enthält.

4. Die kombinierte Vorrichtung mit Bewegungsdetektor und Stoßsensor nach Anspruch 1, wobei der Bewegungsdetektor ein Bewegungsdetektor nach Mikrowellenart ist.

5. Eine kombinierte Vorrichtung mit Bewegungsdetektor und Stoßsensor, umfassend:
einen Bewegungsdetektor;
ein Gehäuse, in dem der Bewegungsdetektor untergebracht ist; und
eine Feder, die an dem Gehäuse angebracht ist, wo zumindest ein Teil der Feder innerhalb eines Feldes eines Erfassungsgebietes des Bewegungsdetektors liegt,
wobei ein Stoß oder eine Erschütterung, die durch das Gehäuse erfahren wird, eine Bewegung der Feder verursacht, die durch den Bewegungsdetektor detektiert wird.

6. Die kombinierte Vorrichtung mit Bewegungsdetektor und Stoßsensor nach Anspruch 5, wobei die Feder eine übliche Form eines invertierten "L" aufweist.

7. Die kombinierte Vorrichtung mit Bewegungsdetektor und Stoßsensor nach Anspruch 5, wobei der Bewegungsdetektor ein Bewegungsdetektor nach Mikrowellenart ist.

8. Eine kombinierte Vorrichtung mit Bewegungsdetektor und Stoßsensor, umfassend:
einen Bewegungsdetektor;
ein Gchäuse, in dem der Bewegungsdetektor untergebracht ist;
einen Behälter, der an dem Gehäuse angebracht ist, wo zumindest ein Teil des Behälters innerhalb eines Feldes eines Erfassungsgebietes des Bewegungsdetektors liegt; und
ein Material, das innerhalb des Containers angeordnet ist,
wobei ein Stoß oder eine Erschütterung, die durch das Gehäuse erfahren wird, eine Bewegung in dem Material verursacht, die durch den Bewegungsdetektor delektiert wird.

9. Die kombinierte Vorrichtung mit Bewegungsdetektor und Stoßsensor nach Anspruch 8, wobei das Material flüssig ist.

10. Die kombinierte Vorrichtung mit Bewegungsdetektor und Stoßsensor nach Anspruch 8, wobei das Material umweltbedingt sicher ist.

11. Die kombinierte Vorrichtung mit Bewegungsdetektor und Stoßsensor nach Anspruch 9, wobei die Flüssigkeit einen relativ niedrigen Gefrierpunkt aufweist.

12. Die kombinierte Vorrichtung mit Bewegungsdetektor und Stoßsensor nach Anspruch 8, wobei das Material ein Pulver ist.

13. Die kombinierte Vorrichtung mit Bewegungsdetektor und Stoßsensor nach Anspruch 8, wobei der Bewegungsdetektor ein Bewegungsdetektor nach Mikrowellenart ist.

## Revendications

1. Appareil de détection de mouvement et de détection de choc combiné comprenant :
un détecteur de mouvement,
un boîtier qui contient ledit détecteur de mouvement, et
un objet attaché audit boîtier où au moins une partie dudit objet est située à l'intérieur d'un champ de couverture dudit détecteur de mouvement,
grâce à quoi le choc ou la vibration subit par ledit boîtier provoque un mouvement dans ledit objet, qui est détecté par ledit détecteur de mouvement.

2. Appareil de détection de mouvement et de détection de choc combiné selon la revendication 1, dans lequel ledit objet est une spire de ressort.

3. Appareil de détection de mouvement et de détection de choc combiné selon la revendication 1, dans lequel ledit objet est un conteneur contenant un liquide.

4. Appareil de détection de mouvement et de détection de choc combiné selon la revendication 1, dans lequel ledit objet est un détecteur de mouvement de type à micro-ondes.

5. Appareil de détection de mouvement et de détection de choc combiné comprenant :
un détecteur de mouvement ;
un boîtier qui contient ledit détecteur de mouvement ; et
une spire de ressort attachée audit boîtier où au moins une partie de ladite spire se situe à l'intérieur d'un champ de couverture dudit détecteur de mouvement,
grâce à quoi le choc ou la vibration subie par ledit boîtier, provoque un mouvement de ladite spire, qui est détecté par ledit détecteur de mouvement.

6. Appareil de détection de mouvement et de détection de choc combiné selon la revendication 5, dans lequel ladite spire de ressort a la forme générale d'un « L » inversé.

7. Appareil de détection de mouvement et de détection de choc combiné selon la revendication 5, dans lequel ledit objet est un détecteur de mouvement de type à micro-ondes.

8. Appareil de détection de mouvement et de détection de choc combiné comprenant :
un détecteur de mouvement,
un boîtier qui contient ledit détecteur de mouvement,
un conteneur attaché audit boîtier où au moins une partie dudit conteneur est à l'intérieur d'un champ de couverture dudit détecteur de mouvement, et
un matériau disposé à l'intérieur dudit conteneur,
grâce à quoi le choc ou la vibration subie par ledit boîtier provoque un mouvement dans ledit matériau, qui est détecté par ledit détecteur de mouvement.

9. Appareil de détection de mouvement et de détection de choc combiné selon la revendication 8, dans lequel ledit matériau est un liquide.

10. Appareil de détection de mouvement et de détection de choc combiné selon la revendication 8, dans lequel ledit matériau est inoffensif pour l'environnement.

11. Appareil de détection de mouvement et de détection de choc combiné selon la revendication 9, dans lequel ledit liquide a un point de congélation relativement bas.

12. Appareil combiné de détection de mouvement et de détection de choc selon la revendication 8, dans lequel ledit matériau est une poudre.

13. Appareil de détection de mouvement et de détection de choc combiné selon la revendication 8, dans lequel ledit détecteur de mouvement est un détecteur de mouvement de type à micro-ondes.
